# EUROPÄISCHE PATENTSCHRIFT

(11) **EP 0 539 548 B1**
(45) Veröffentlichungstag und Bekanntmachung des Hinweises auf die Patenterteilung: **21.08.1996**
(21) Anmeldenummer: 92909732.7
(22) Anmeldetag: 20.05.1992
(51) Int. Cl.: B60S 1/34

(54) **WISCHARM, INSBESONDERE FÜR KRAFTFAHRZEUGE**
WIPER ARM, ESPECIALLY FOR MOTOR VEHICLES
BRAS D'ESSUIE-GLACE, EN PARTICULIER POUR VEHICULES AUTOMOBILES

(30) Priorität: 25.05.1991 DE 4117106
(43) Veröffentlichungstag der Anmeldung: 05.05.1993
(73) Patentinhaber: ITT Automotive Europe GmbH, D-60488 Frankfurt am Main (DE)
(72) Erfinder: EDELE, Reinhard, D-7123 Sachsenheim 2 (DE); JOHANNES, Reinhard, D-7101 Eberstadt-Hölzern (DE); KRIZEK, Oldrich, D-7120 Bietigheim-Bissingen (DE); SCHMID, Eckhardt, D-7129 Brackenheim (DE)
(86) Internationale Anmeldenummer: EP9201125
(87) Internationale Veröffentlichungsnummer: WO9221537

(56) Entgegenhaltungen:
- WO-A-00/10561
- DE-A- 3 346 384
- DE-A- 3 639 537
- DE-A- 3 740 639
- DE-B- 2 756 991
- DE-U- 8 708 171
- GB-A- 1 198 770
- GB-A- 1 603 589
- PATENT ABSTRACTS OF JAPAN vol. 8, no. 16 (M-270)(1453) 24. Januar 1984 & JP-A-58 177 754 (ARIHARO SATOU) 18 October 1983

## Beschreibung

Die Erfindung bezieht sich auf einen Wischarm gemäß den Merkmalen des Oberbegriffs des Anspruchs 1.

Derartige Wischarme mit einer zumindest auf einem Teil der Wischstangenlänge aufgebrachten Umhüllung sind aus der DE-OS 33 46 384 bekannt. Hierbei erfüllt die vorgeschlagene Umhüllung die Aufgabe, dem Betrachter eine einwandfreie, glatte Oberfläche des Wischarmes, insbesondere der Wischstange, zu bieten. Hierzu werden sowohl lose Umhüllungen als auch fest aufgebrachte Ummantelungen vorgeschlagen. Außerdem ist aus vorstehender Offenlegungsschrift zu entnehmen, daß auf dem Wischarm eine Spritzvorrichtung angebracht sein kann, die dafür sorgt, daß insbesondere der vom Wischblatt erfaßte Teil der Scheibe mit Waschflüssigkeit benetzt wird.

Weiterhin wird vorgeschlagen, in der Ummantelung eine Bohrung vorzusehen, die als Waschflüssikeitsleitung dient. Diese Art der abschnittsweise als Bohrung realisierten Waschflüssigkeitsleitung ist deshalb vorteilhaft, weil am Ende der Bohrung ein Düsenkopf eingeknöpft wird. An Scheiben- oder Leuchtenwaschanlagen, bei denen ein separater Düsenkörper vorgesehen ist, ist diese Ausführungsform jedoch nicht zweckmäßig.

Aufgabe der Erfindung ist es, einen Wischarm der eingangs genannten Art zu schaffen, der eine sichere Schlauchfixierung und Schlauchführung bietet, die auch den Angriffen von Dampfstrahlgeräten und Bürsten von Fahrzeugwaschanlagen standhält. Andererseits soll der Schlauch im Servicefall ohne größere Umstände demontierbar sein. Die Kosten und die Anzahl von zusätzlich notwendigen, einzelnen Teilen, die den Schlauch halten, sollen möglichst niedrig sein. Letztendlich soll die Ummantelung den Wischarm optisch aufwerten und die Schlauchführungsteile sollen möglichst unauffällig sein. Der Schlauch soll für den Fahrzeugbetrachter von außen her weitgehend verborgen bleiben.

Diese Aufgabe wird von einem Wischarm gelöst, welcher neben den im Oberbegriff aufgeführten Merkmalen die im kennzeichnenden Teil des Anspruchs 1 aufgeführten Merkmale aufweist.

Der vorgeschlagene Schlauchkanal ist an die Ummantelung angeformt, um die Anzahl von Einzelteilen nicht zu vergrößern und Montagekosten zu vermeiden. Zwischen den Wangen wird der Schlauch sicher über die gesamte Länge des Schlauchkanals geführt. Dabei kann der Schlauch dennoch leicht aus dem Kanal entnommen und ebenso leicht wieder eingebracht werden. Es sind dazu keinerlei Werkzeuge erforderlich.

Durch die im Anspruch 2 angegebene Ausführung bleibt der Schlauch in der Frontansicht des Fahrzeugs vollständig und in den Seitenansichten weitgehend verborgen.

In den Ansprüchen 3 bis 6 werden vorteilhafte Ausgestaltungen des Schlauchkanals angegeben. Dabei erscheint eine Ausführung besonders zweckmäßig, bei der gemäß Anspruch 5 ein Hinterschnitt nur in geraden Abschnitten, also nicht in gekrümmten Abschnitten des Schlauchkanals, vorhanden ist. Dies hat spritztechnische Vorteile, da die Wangen in den geraden Abschnitten soviel nach außen nachgeben, daß der Hinterschnitt ohne weiteres entfernt werden kann. In den gerkrümmten Abschnitten dagegen könnten Beschädigungen, insbesondere Risse, entstehen, wenn die Wangen dort beim Entformen nach außen nachgeben müßten.

Im Anspruch 7 wird der Einsatz einer Ummantelung an einem Wischarm mit Gelenkteil vorgeschlagen. Das Gelenkteil kann dabei beispielsweise durch eine Vercrimpung mit der Wischstange verbunden sein.

Anspruch 8 richtet sich auf einen Wischarm mit Gelenkteil, bei dem das Gelenkteil mit der Wischstange ebenfalls formschlüssig verbunden ist und bei dem der Schlauchkanalboden und die sich anschließende, scheibenseitige Oberfläche des Gelenkteils in etwa in einer Ebene liegen, um in diesem Bereich eine weitgehend geradlinige Schlauchführung zu erhalten.

In den Ansprüchen 9 und 10 werden ergänzende Maßnahmen vorgeschlagen, um den Schlauch über die weiteren, nicht mit einer Ummantelung versehenen Wischarmabschnitte zu führen.

Anspruch 11 richtet sich auf einen verfahrenstechnisch besonders günst herstellbaren Wischarm, und im Anspruch 12 ist ein für die Herstellung der Ummantelung mit Schlauchkanal zu bevorzugendes Material angegeben.

Weitere vorteilhafte Einzelheiten und Ausgestaltungen der Erfindung sind aus der nachfolgend erläuterten Zeichnung ersichtlich, in der Ausführungsbeispiele dargestellt sind.

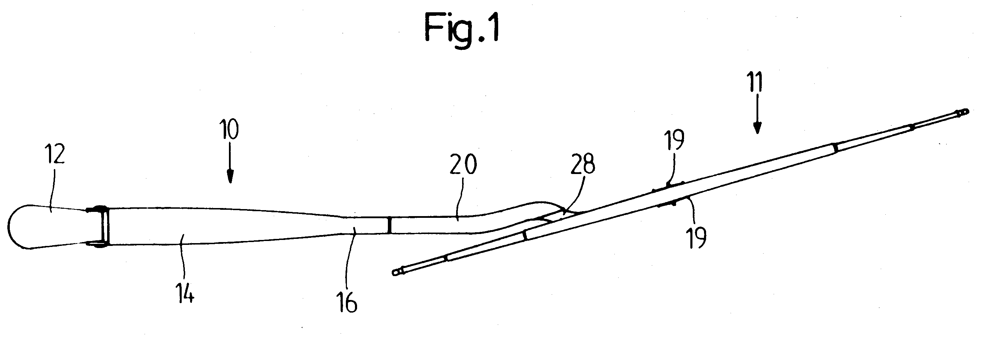

Hierbei zeigt
- Fig. 1: einen erfindungsgemäßen Wischarm mit Wischblatt und Düsen,
- Fig. 2: eine Unteransicht des Wischarms mit Schlauchhalter, ohne Wischblatt und ohne Düsenträger,
- Fig. 3: den Wischarm teilweise längsgeschnitten, teilweise in Seitenansicht
- Fig. 4: eine Unteransicht des Wischarms aus Fig. 3 mit einer Aufsteckklammer und einer Schlauchhalteklammer,
- Fig. 5: den Wischarm nach Fig. 4 teilweise längsgeschnitten, teilweise in Seitenansicht,
- Fig. 6: einen Schnitt entlang der Linie VI-VI in Fig. 3,
- Fig. 7: einen Schnitt entlang der Linie VII-VII in Fig. 4,
- Fig. 8: einen Schnitt entlang der Linie VIII-VIII in Fig. 3,
- Fig. 9: einen Schnitt entlang der Linie IX-IX in Fig. 5,
- Fig. 10: ein weiteres Ausführungsbeispiel als Schnitt entlang der Linie IX-IX in Fig. 5,
- Fig. 11: einen Schnitt entlang der Linie XI-XI in Fig. 3 und
- Fig. 12: einen Schnitt entlang der Linie XII-XII in Fig. 5.

Der erfindungsgemäße Wischarm 10 besitzt eine im Querschnitt etwa rechteckförmige, aus einem Federstahlband bestehende Wischstange 15. Diese Wischstange 15 ist zumindest auf einem Teil ihrer Länge mit einer Ummantelung 20 versehen.

Durch Wangen 23, 24, 26 wird zusammen mit dem Schlauchkanalboden 25 ein Schlauchkanal 21 gebildet. Die Wange 24 hat einen zur gegenüberliegenden Wange hin kreisbogenförmig verlaufenden Endabschnitt, um den Schlauch 18 halten zu können. An die Wange 23 ist zu diesem Zweck an den geradlinig verlaufenden Abschnitten des Schlauchkanals 21 ein Hinterschnitt 27 angeformt.

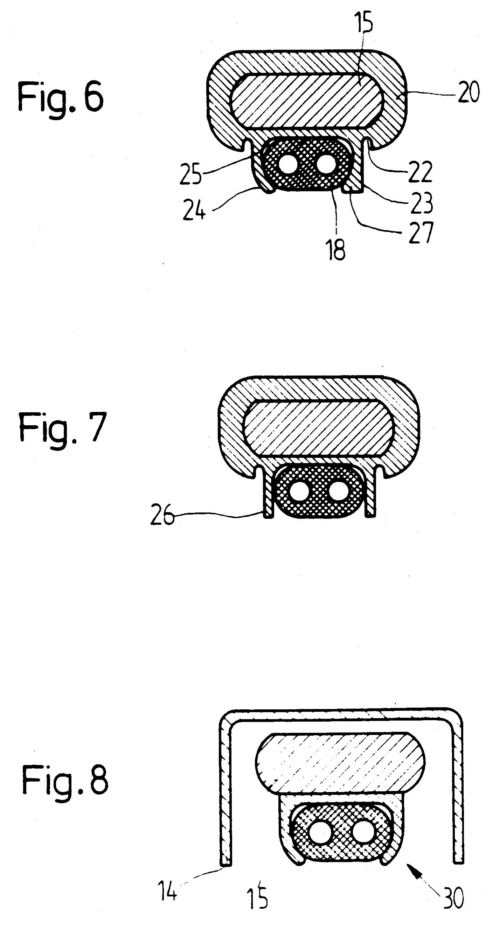

Für eine gute Entformbarkeit des Schlauchkanals 21 im Spritzgußwerkzeug ist es jedoch zweckmäßig, an den gekrümmten Wangenabschnitten den Hinterschnitt 27 entfallen zu lassen. Beim Ausführungsbeispiel sind die Wangen 26 in diesen Abschnitten deshalb geradwandig ausgebildet (vgl. Figur 7). Um die Wangen 23, 24 aus ihren Spritzgußwerkzeug entformen zu können, ist eine möglichst hohe radiale Elastizität der freien Wangenenden erforderlich. Diese Elastizität ist durch Anbringen eines Einschnittes 22 erzielt bzw. verbessert. Dabei reicht es schon aus, daß ein Einschnitt 22 wenigstens an den geradling verlaufenden Abschnitten des Schlauchkanals 21 vorgesehen wird, weil nur dort die Wangen einen Hinterschnitt besitzen.

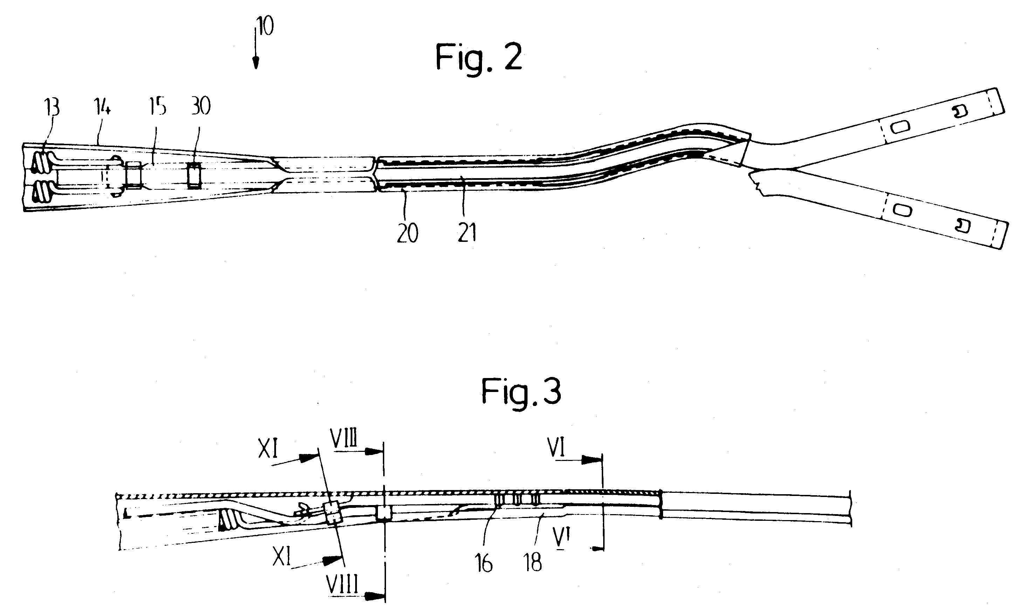

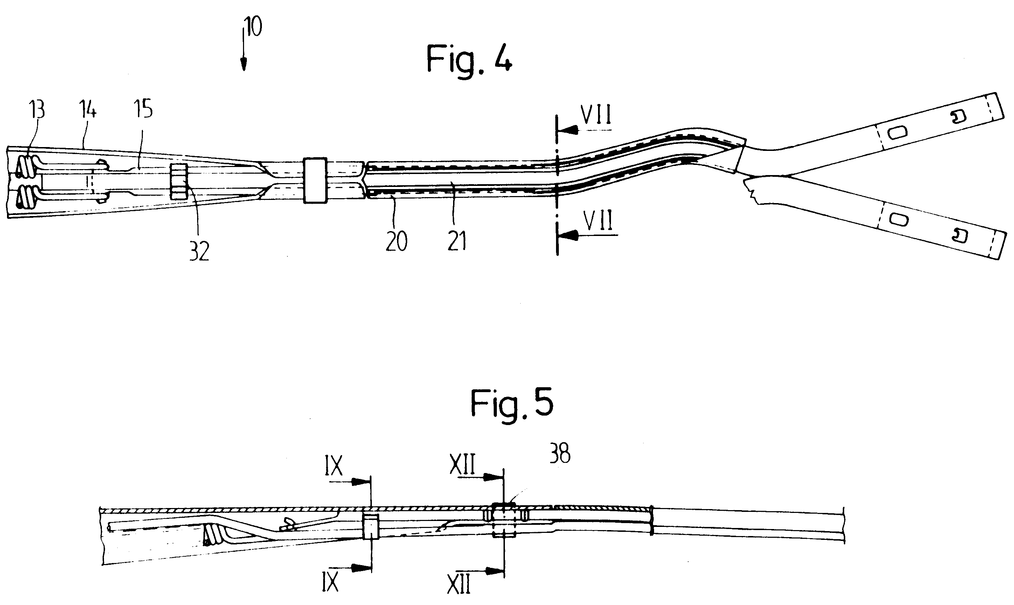

Um ein ansprechendes Äußeres des Wischarms bei seiner Seitenansicht (vgl. z. B. Fig. 3 und Fig. 5) zu erhalten und andererseits den Schlauch über einen größtmöglichen Abschnitt zu halten und zu führen, sind die Wangen möglichst über der ganzen Länge der Ummantelung angebracht.

Bei unterschiedlicher Dicke von Schlauchkanalboden 25 und Gelenkteilmaterial entsteht eine "Stufe" im Bereich des Schlauchübergangs vom Schlauchkanal 21 zur Oberfläche des die Wischstange 15 formschlüssig umgreifenden Gelenkteils 14.

Sofern nun das Gelenkteilmaterial dicker ist als der Schlauchkanalboden 25 wird der Schlauch zwischen Stufe und Hinterschnitt 27 etwas gequetscht. Dies wird vermieden, indem der Hinterschnitt 27 nicht ganz bis zum gelenkteilseitigen Ende des Schlauchkanals 21 läuft, sondern schon einige Millimeter zuvor endet. Dadurch kann der Schlauch an dieser Stelle etwas aus dem Schlauchkanal hervortreten. Eine alternative Möglichkeit besteht darin, den Schlauchkanalboden 25 zumindest am gelenkteilseitigen Ende in der gleichen Dicke wie das Gelenkteil 14 auszuführen. Dann kann der Hinterschnitt 27 bis zum Ende des Schlauchkanals 21 laufen und es wird eine bestmögliche Schlauchführung erzielt.

Um den Schlauch 18 auch außerhalb des Schlauchkanals 21 sicher zu führen, sind bei dem Wischarm, wie aus den Fig. 2 bis 5 ersichtlich und in den Fig. 8 bis 12 näher dargestellt ist, weitere Elemente zur Fixierung des Schlauches vorgesehen.

Fig. 8 zeigt einen Schlauchhalter 30, der auf die Wischstange 15 aufgeklebt ist. Er weist einen dem Schlauchkanal sehr ähnlichen Querschnitt auf.

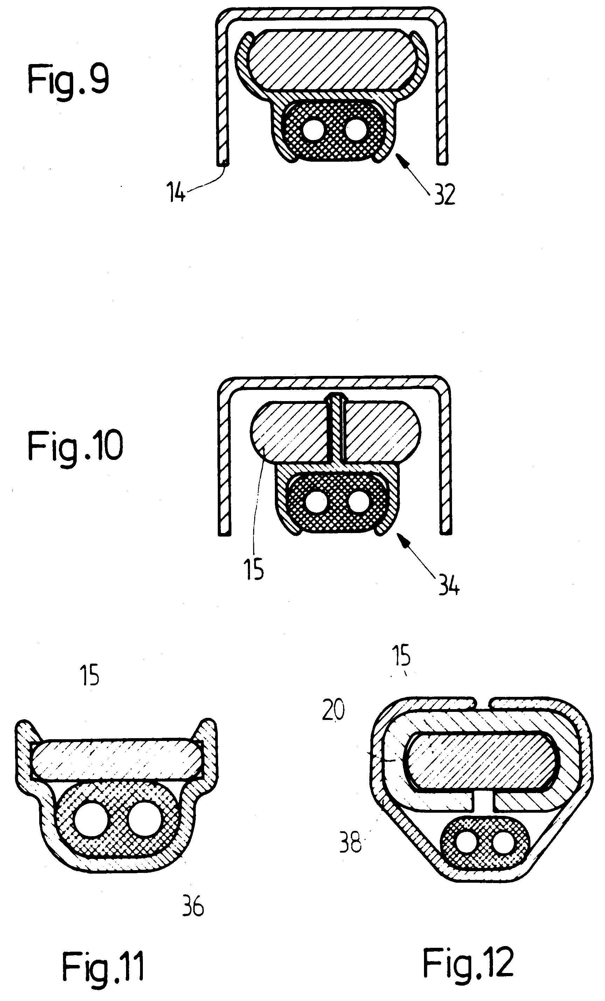

Fig. 9 und Fig. 10 zeigen zwei verschiedene Ausführungsbeispiele mit einem Schlauchhalter, wobei der Schlauchhalter 32 nach Figur 9 die Wischstange 15 klammerartig umgreift und der Schlauchhalter 34 nach Fig. 10 in die Wischstange eingesteckt wird.

Fig. 11 zeigt den Schlauchhalter 36, der die von der Wischstange 15 abgewandte Seite des Schlauches umschließt und sich mit seinen hakenartigen Enden an der Wischstange hält.

Fig. 12 zeigt einen Schlauchhalter 38, der den Schlauch 18 in einer vorgegebenen Position zur Umklammerung 16 hält.

Grundsätzlich ist man bestrebt, die Ummantelung und den Schlauchkanal über einen möglichst langen Abschnitt der Wischstange auszudehnen, um einerseits ein gutes Erscheinungsbild und andererseits eine zuverlässige Schlauchführung zu realisieren.

## Patentansprüche

1. Wischarm, insbesondere für Kraftfahrzeuge, mit einer Wischstange (15), an deren einem Ende ein Wischblatt (11) befestigbar ist und die mindestens auf einem Teil ihrer Länge eine Ummantelung (20) aufweist, wobei ein Schlauch (18) eine an der Wischstange (15) oder an dem Wischblatt (11) oder an einem Verbindungselement zwischen Wischstange (15) und Wischblatt (11) angeordneten Spritzeinrichtung (19) mit Waschflüssigkeit versorgt, dadurch **gekennzeichnet**, daß die Ummantelung (20) einstückig mit einem Schlauchkanal (21) zur Aufnahme und Fixierung des Schlauches (18) versehen ist und daß der Schlauchkanal (21) durch Wangen (23, 24, 26) und einen Schlauchkanalboden (25) gebildet ist.

2. Wischarm nach Anspruch 1, dadurch **gekennzeichnet**, daß der Schlauchkanal (21) scheibenseitig angebracht ist.

3. Wischarm nach einem der Ansprüche 1 oder 2, dadurch **gekennzeichnet**, daß die Ummantelung (20) den Wischstangenumfang vollständig umschließt und daß der Schlauchkanalboden dünner ist als die anderen Segmente der Ummantelung.

4. Wischarm nach einem der Ansprüche 1 bis 3, dadurch **gekennzeichnet**, daß die Wangen (23) innen wenigstens abschnittsweise mit einem Hinterschnitt (27) zum Halten des Schlauches versehen sind.

5. Wischarm nach einem der Ansprüche 1 bis 4, dadurch **gekennzeichnet**, daß ein Hinterschnitt (27) nur in geraden Abschnitten des Schlauchkanals (21) vorhanden ist und daß an gekrümmten Stellen des Schlauchkanals (21) die Wangen (26) innen insbesondere geradwandig geformt sind.

6. Wischarm nach einem der Ansprüche 1 bis 5, dadurch **gekennzeichnet**, daß am Fuße der Wangen (23, 24, 26) zumindest in deren geradlinig verlaufenden Abschnitten Einschnitte (22) angebracht sind.

7. Wischarm nach einem der Ansprüche 1 bis 6, dadurch **gekennzeichnet**, daß dieser ein Gelenkteil (14) aufweist und daß das wischblattseitige Ende des Gelenkteils (14) die Wischstange (15) umklammert und daß der an die Umklammerung (16) angrenzende Endabschnitt des Schlauchkanals (21) geradwandige Wangen (26) aufweist.

8. Wischarm nach einem der Ansprüche 1 bis 6, dadurch **gekennzeichnet**, daß dieser ein Gelenkteil (14) aufweist und daß das wischblattseitige Ende des Gelenkteils (14) die Wischstange (15) umklammert und daß der Schlauchkanalboden (25) in etwa die gleiche Dicke aufweist wie das Material des Gelenkteils (14).

9. Wischarm nach einem der Ansprüche 1 bis 6, dadurch **gekennzeichnet**, daß dieser ein Gelenkteil (14) aufweist und daß das wischblattseitige Ende des Gelenkteils (14) die Wischstange (15) umklammert und daß innerhalb des Gelenkteils (14) ein Schlauchhalter (30, 32, 34, 36) auf der Wischstange (15) angebracht ist.

10. Wischarm nach einem der Ansprüche 1 bis 9, dadurch **gekennzeichnet**, daß dieser ein Gelenkteil (14) aufweist und daß das wischblattseitige Ende des Gelenkteils (14) die Wischstange (15) umklammert und daß das Gelenkteil (14) im Bereich der Umklammerung (16) mit einem Schlauchhalter (38) versehen ist.

11. Wischarm nach einem der Ansprüche 1 bis 10, dadurch **gekennzeichnet**, daß die Ummantelung (20) mit dem Schlauchkanal (21) und gegebenenfalls der Schlauchhalter (30) im Kunststoff-Spritzgußverfahren durch Anspritzung hergestellt ist.

12. Wischarm nach einem der Ansprüche 1 bis 11, dadurch **gekennzeichnet**, daß die Ummantelung (20) mit Schlauchkanal (21) und einer oder mehrere Schlauchhalter (30, 32, 34, 36, 38) aus Ultradur (Warenzeichen der BASF) hergestellt ist.

## Claims

1. A wiper arm, in particular adapted for use on automotive vehicles, including a wiper rod (15), a wiper blade (11) which can be fixed to the one end of the wiper rod, the wiper rod including a coating (20) at least around part of its length, wherein a hose (18) supplies washing liquid to a spraying facility (19) which is arranged on the wiper rod (15), on the wiper blade (11) or on a connecting element between the wiper rod (15) and the wiper blade (11),
**characterized** in that the coating (20) is integrally provided with a hose channel (21) for receiving and locking the hose (18), and in that the hose channel (21) is formed of flanges (23, 24, 26) and a bottom of the hose channel (25).

2. A wiper arm as claimed in claim 1,
**characterized** in that the hose channel (21) is attached to the side adjacent the windshield.

3. A wiper arm as claimed in any one of claims 1 or 2,
**characterized** in that the coating (20) completely surrounds the circumference of the wiper rod, and in that the bottom of the hose channel is thinner than the other portions of the coating.

4. A wiper arm as claimed in any one of the claims 1 to 3,
**characterized** in that the flanges (23) are provided with an undercut (27) on the inside, at least in sections, to support the hose.

5. A wiper arm as claimed in any one of the claims 1 to 4,
**characterized** in that there is an undercut (27) only in straight sections of the hose channel (21), and in that the flanges (26) are formed on the inside with straight walls in bent sections of the hose channel (21).

6. A wiper arm as claimed in any one of the claims 1 to 5,
**characterized** in that there are cuts (22) at the foot of the flanges (23, 24, 26), at least at the straight sections of the flanges.

7. A wiper arm as claimed in any one of the claims 1 to 6,
**characterized** in that the wiper arm includes a joint (14), and in that the end of the joint (14) close to the wiper rod grips the wiper blade (15), and in that the end section of the hose channel (21) adjacent to the clasping means (16) includes flanges (26) with straight walls.

8. A wiper arm as claimed in any one of the claims 1 to 6,
**characterized** in that the wiper arm includes a joint (14), and in that the end of the joint (14) close to the wiper blade grips the wiper rod (15), and in that the hose channel bottom (25) is of approximately the same thickness as the material of the joint (14).

9. A wiper arm as claimed in any one of the claims 1 to 6,
**characterized** in that the wiper arm includes a joint (14) and the end of the joint (14) close to the wiper blade grips the wiper rod (15), and in that a hose support (30, 32, 34, 36) is fixed to the wiper rod (15) within the joint (14).

10. A wiper arm as claimed in any one of the claims 1 to 9,
**characterized** in that the wiper arm includes a joint (14) and the end of the joint (14) close to the wiper blade grips the wiper rod (15), and in that the joint (14) has a hose support (38) in proximity to the clasping means (16).

11. A wiper arm as claimed in any one of the claims 1 to 10,
**characterized** in that the coating (20) with the hose channel (21) and, if necessary, the hose support (38) are injection moulded in a plastics injection moulding process.

12. A wiper arm as claimed in any one of the claims 1 to 11,
**characterized** in that the coating (20) with the hose channel (21) and one or several hose supports (30, 32, 34, 36, 38) are made from Ultradur (trademark of BASF).

## Revendications

1. Bras d'essuie-glace, notamment pour véhicule automobile, comprenant une tige d'essuie-glace (15) à une extrémité de laquelle un balai d'essuie-glace (11) peut être fixé et qui comporte une enveloppe (20) au moins sur une partie de sa longueur, tandis qu'un tuyau souple (18) alimente en liquide de lavage un dispositif de pulvérisation (19) disposé sur la tige d'essuie-glace (15), sur le balai d'essuie-glace (11) ou sur un élément de jonction situé entre la tige d'essuie-glace (15) et le balai d'essuie-glace (11), caractérisé en ce que l'enveloppe (20) est pourvue, formant un seul bloc avec elle, d'un conduit de tuyau souple (21) servant à loger et fixer le tuyau souple (18) et en ce que le conduit de tuyau souple (21) est formé par des joues (23, 24, 26) et par un fond de conduit de tuyau souple (25).

2. Bras d'essuie-glace selon la revendication 1, caractérisé en ce que le conduit de tuyau souple (21) est monté du côté du pare-brise.

3. Bras d'essuie-glace selon l'une des revendications 1 et 2, caractérisé en ce que l'enveloppe (20) entoure totalement là périphérie de la tige d'essuie-glace et en ce que le fond du conduit d'essuie-glace est plus mince que les autres segments de l'enveloppe.

4. Bras d'essuie-glace selon l'une des revendications 1 à 3, caractérisé en ce que les joues (23) sont pourvues intérieurement, au moins par sections, d'une partie en contredépouille (27) servant à maintenir le tuyau souple.

5. Bras d'essuie-glace selon l'une des revendications 1 à 4, caractérisé en ce qu'une partie en contre-dépouille (27) n'est prévue que sur des sections rectilignes du conduit de tuyau souple (21) et en ce qu'aux emplacements courbes du conduit de tuyau souple (21), les joues (26) sont formées intérieurement notamment avec des parois rectilignes.

6. Bras d'essuie-glace selon l'une des revendications 1 à 5, caractérisé en ce que des rainures (22) sont pratiquées à la base des joues (23, 24, 26), au moins sur les sections de ces joues qui s'étendent d'une manière rectiligne.

7. Bras d'essuie-glace selon l'une des revendications 1 à 6, caractérisé en ce qu'il comporte une pièce d'articulation (14), en ce que l'extrémité de la pièce d'articulation (14) qui est située du côté du balai d'essuie-glace enveloppe la tige d'essuie-glace (15) à la façon d'une agrafe et en ce que la section d'extrémité du conduit de tuyau souple (21) qui se raccorde à la partie (16) d'enveloppement à la façon d'une agrafe comporte des joues (26) à paroi rectiligne.

8. Bras d'essuie-glace selon l'une des revendications 1 à 6, caractérisé en ce qu'il comporte une pièce d'articulation (14), en ce que l'extrémité de la pièce d'articulation (14) qui est située du côté du balai d'essuie-glace enveloppe la tige d'essuie-glace (15) à la façon d'une agrafe et en ce que le fond (25) du conduit de tuyau souple possède approximativement la même épaisseur que le matériau de la pièce d'articulation (14).

9. Bras d'essuie-glace selon l'une des revendications 1 à 6, caractérisé en ce qu'il comporte une pièce d'articulation (14), en ce que l'extrémité de la pièce d'articulation (14) qui est située du côté du balai d'essuie-glace enveloppe la tige d'essuie-glace (15) à la façon d'une agrafe et en ce qu'à l'intérieur de la pièce d'articulation (14), un élément de support de tuyau souple (30, 32, 34, 36) est monté sur la tige d'essuie-glace (15).

10. Bras d'essuie-glace selon l'une des revendications 1 à 9, caractérisé en ce qu'il comporte une pièce d'articulation (14), en ce que l'extrémité de la pièce d'articulation (14) qui est située du côté du balai d'essuie-glace enveloppe la tige d'essuie-glace (15) à la façon d'une agrafe et en ce que la pièce d'articulation (14) est pourvue d'un élément de support de tuyau souple (38) dans la zone de l'enveloppement (16) à la façon d'une agrafe.

11. Bras d'essuie-glace selon l'une des revendications 1 à 10, caractérisé en ce que l'enveloppe (20) est réalisée par injection, avec le conduit de tuyau souple (21) et éventuellement avec les éléments de support de tuyau souple (30), par le procédé de moulage de matière plastique par injection.

12. Bras d'essuie-glace selon l'une des revendications 1 à 11, caractérisé en ce que l'enveloppe (20) est réalisée, avec le conduit de tuyau souple (21) et un ou plusieurs éléments de support de tuyau souple (30, 32, 34, 36, 38) en Ultradur (marque déposée de BASF).
